# EUROPÄISCHE PATENTSCHRIFT

(11) **EP 2 425 120 B1**
(45) Veröffentlichungstag und Bekanntmachung des Hinweises auf die Patenterteilung: **08.05.2013**
(21) Anmeldenummer: 10708133.3
(22) Anmeldetag: 09.03.2010
(51) Int. Cl.: F03B 3/12

(54) **BIDIREKTIONAL ANSTRÖMBARE TURBINE**
BIDIRECTIONALLY IMPINGEABLE TURBINE
TURBINE RECEVANT DES COURANTS BIDIRECTIONNELS

(30) Priorität: 28.04.2009 DE 102009018924
(43) Veröffentlichungstag der Anmeldung: 07.03.2012
(73) Patentinhaber: Voith Patent GmbH, 89522 Heidenheim (DE)
(72) Erfinder: WEILEPP, Jochen, 89518 Heidenheim (DE); ARLITT, Raphael, 89077 Ulm (DE)
(74) Vertreter: Dr. Weitzel & Partner
(86) Internationale Anmeldenummer: PCT/EP2010/001439
(87) Internationale Veröffentlichungsnummer: WO 2010/124762

(56) Entgegenhaltungen:
- US-A- 4 313 711
- US-A1- 2007 231 148

## Beschreibung

Die Erfindung betrifft eine bidirektionale Turbine, die beim Wechsel der Anströmungsrichtung ihren Drehsinn beibehält, bevorzugt eine Wells-Turbine, und eine Energieerzeugungsanlage, insbesondere ein Wellenkraftwerk, das eine solche Turbine umfasst.

Bidirektional anströmbare Turbinen mit gleichsinnigem Umlauf werden beispielsweise zur Energiegewinnung mittels Wellenkraft eingesetzt. Dabei wird die Wellenenergie meist indirekt zum Antrieb der Turbine verwendet, indem eine Meereswelle durch einen unterirdischen Zugang in eine Wellenkammer eintritt und mit dem sich hebenden und fallenden Wasserspiegel in der Wellenkammer ein darüber befindliches Luftvolumen mit oszillierenden Druckschwankungen beaufschlagt. Wird zum Luftvolumen in der Wellenkammer ein zum Außenbereich führender Strömungskanal angelegt, in dem sich eine Luftturbine befindet, kann durch die im Strömungskanal resultierende Luftströmung eine gattungsgemäße Luftturbine betrieben werden.

Eine typische Bauform einer bidirektional anströmbaren Turbine mit gleichsinnigem Umlauf stellt eine Wells-Turbine dar. Diese kann als Axial- oder Radialturbine ausgebildet sein und umfasst ein oder mehrere Laufräder, die vorzugsweise eine Nabe mit darauf befestigten Turbinenblättern aufweisen. Die einzelnen Turbinenblätter sind zur Realisierung einer beidseitigen Anströmbarkeit bezüglich der Profilsehne symmetrisch angelegt und weisen einen tropfenförmigen Profilverlauf auf. Die Profilsehne liegt für Axialturbinen typischerweise in der Rotationsebene des Laufrads. Hierzu wird beispielhaft auf die US 5,191,225 verwiesen.

Ferner sind aus der US 4,313,711 zu beiden Seiten an einem Laufrad vorgesehene Leitschaufelanordnungen bekannt, die die Anströmung so ablenken, dass der effektive Geschwindigkeitsvektor mit einem verringerten Anstellwinkel am Profil ansteht. Weiterentwicklungen von Wells-Turbinen betreffen Mechanismen zur aktiven oder passiven Pitch-Verstellung für die Turbinenblätter - für Letzteres wird auf JP 63219801 A verwiesen. Hierdurch werden insbesondere das Anlaufverhalten und die Gefahr eines Strömungsabrisses für einen kritischen Betrieb bei hohem Durchflusskoeffizienten reduziert.

Weitere Ausgestaltungen für Wells-Turbinen sind der DE 32 13 810 A1 zu entnehmen. Offenbart wird eine Doppelreihenanordnung von Turbinenschaufeln mit asymmetrischen Profilen, wobei jeweils eine Reihe der Turbinenschaufeln an eine der Anströmungsrichtungen angepasst ist und bezüglich der Asymmetrien spiegelbildlich zur anderen Turbinenschaufelreihe ausgebildet ist. Durch die jeweils komplementäre Ausgestaltung der Asymmetrien für beide Reihen entsteht eine Turbinenstufe, die als Ganzes zur Sicherstellung der bidirektionalen Anströmbarkeit symmetrisch ist, wobei die zugeordnete Symmetrieebene die Drehachse als Flächennormale aufweist.

Der Erfindung liegt die Aufgabe zugrunde, eine bidirektional anströmbare, gleichsinnig umlaufende Turbine, insbesondere eine Wells-Turbine, so zu gestalten, dass ihr gemittelter Wirkungsgrad gesteigert und die Ausbildung von Instabilitäten, die insbesondere aus Strömungsabrissen resultieren, verringert werden. Entsprechend soll die Turbine eine Gestaltung aufweisen, die einen geräuschverminderten Betrieb erlaubt.

Die der Erfindung zugrunde liegende Aufgabe wird durch die Merkmale des unabhängigen Anspruchs gelöst. Dabei gehen die Erfinder von der Erkenntnis aus, dass in einem mit einer Wellenkammer verbundenen Strömungskanal eine oszillierende Luftströmung vorliegt, die nicht sinusförmig ist. Einer der Gründe dafür sind Asymmetrien der Gesamtanlage. So liegen unterschiedliche Randbedingungen an den Mündungen des Strömungskanals vor, da eine Öffnung zur Wellenkammer und die andere in den Freibereich mit Umgebungsdruck führt. Ferner resultiert durch zusätzliche Komponenten im Strömungskanal, wie der Drosselklappe, dem Sicherheitsventil, dem Schalldämpfer und jeweils einseitig vorgesehenen oder zu beiden Seiten unterschiedlich gestalteten Diffusoren oder Konfusoren eine Abweichung vom sinusförmigen Strömungsverlauf im Strömungskanal.

Des Weiteren führt die Wellencharakteristik selbst zu einer wesentlichen Richtungsabhängigkeit der Durchströmung des Strömungskanals. Durch ein Anstellen der Welle beim Erreichen des Flachwasserbereichs weicht die Wellenform zunehmend vom periodischen Verlauf ab - dabei stellt sich der Wellenberg steil auf. Als Resultat entsteht mit steigendem Wasserspiegel in der Wellenkammer ein kurzer und starker Druckpuls, der zu einem entsprechenden Durchfluss im Strömungskanal führt. Hiervon weicht die Charakteristik beim Auslaufen der Welle und Absinken des Wasserspiegels in der Wellenkammer ab, wobei ein schwächerer, aber gleichmäßigerer Durchfluss erzeugt wird.

Für die erfindungsgemäße Turbine wird eine Anpassung an die richtungsabhängige Anströmung vorgenommen. Hierdurch entsteht eine asymmetrische Gestaltung wenigstens einer aerodynamisch aktiven Stufe, wobei unter einer aerodynamisch aktiven Stufe ein Laufrad oder, falls vorhanden, zusätzlich der dem Laufrad zugeordnete Leitapparat verstanden wird. Die erfindungsgemäß vorgesehene Asymmetrie bezieht sich dabei auf die aerodynamische Stufe als Ganzes, so dass für eine erste Durchflussrichtung eine von der entgegengesetzten, zweiten Durchflussrichtung abweichende Charakteristik vorliegt. Ferner wird das Profil der Turbinenblätter eines Laufrads so gestaltet, dass das Erfordernis der bidirektionalen Anströmbarkeit hinreichend gut durch jedes einzelne Turbinenblatt erfüllt wird und zugleich die geforderte Asymmetrie zur Anpassung der mit der Anströmungsrichtung veränderten Anströmungscharakteristik realisiert werden kann. Dabei wird das Profil entlang der Profilsehne in zwei Profilhälften aufgeteilt. Demnach liegen eine ersten Profilhälfte und eine zweite Profilhälfte mit übereinstimmender Profiltiefe vor, die an den Profilnasen stetig ineinander übergehen und die gegenüberliegend zur Profilsehne angeordnet sind.

Sowohl die erste Profilhälfte als auch die zweite Profilhälfte ist ein Halbprofil, jeweils entnommen aus einem symmetrisch zur Profilsehne gestalteten Profil, das an die zur jeweiligen Anströmungsrichtung gehörende Strömungscharakteristik angepasst ist. Die einer bestimmten Anströmungsrichtung zugeordnete Profilhälfte liegt auf der Saugseite des erfindungsgemäßen Gesamtprofils, auf der es ihre wesentliche aerodynamische Wirkung entfaltet. Ein Kriterium zur Anpassung der saugseitigen Profilhälfte ist der maximal für die jeweilige Strömungsrichtung auftretende Durchflusskoeffizient. Hierbei wird die entsprechende Profilhälfte so gestaltet, dass ein saugseitig auftretender, vollflächiger Strömungsabriss möglichst sicher ausgeschlossen wird. Dabei kommt zur Profilanpassung insbesondere die saugseitige Dickenverteilung in Frage, so dass die Dicke, die Dickenrücklage sowie der Profilnasenradius an die Strömungscharakteristik für die jeweilige Anströmungsrichtung angepasst werden.

Für Wellenkraftwerke, die nach dem OWC-Prinzip arbeiten (Oscillating Wave Column), wird bevorzugt das erfindungsgemäße Profil der Turbinenblätter so gestaltet, dass die bei einer Ausströmung, das heißt einer Strömung von der Wellenkammer in Richtung des Außenbereichs, saugseitig liegende Profilhälfte das dickere Profil mit einer geringeren Dickenrücklage aufweist. Ferner werden hierfür größere Profilnasenradien bevorzugt. Hierbei macht man sich den Umstand zunutze, dass dicke Profile und große Profilnasenradien bei den für die vorliegende Anwendung typischerweise hinreichend großen Reynolds-Zahlen ein verbessertes Abreißverhalten zeigen. Auf der gegenüberliegenden Seite und damit für die andere Profilhälfte, die beim Einsaugzyklus saugseitige, treten mit geringerer Wahrscheinlichkeit die genannten Instabilitäten auf. Entsprechend können schlankere Profile mit größerer Dickenrücklage, die zu einem geringeren Widerstand führen, verwendet werden. Insgesamt entsteht ein Profil, das ein verbessertes Ablösungsverhalten zeigt. Des Weiteren ist der von der Turbine abgestrahlte Schallpegel reduziert.

Für eine Weitergestaltung der Erfindung wird der Leitapparat einer aerodynamisch wirksamen Stufe asymmetrisch gestaltet. Hierbei ist entweder nur eine auf einer Seite des Laufrads der Stufe angeordnete Leitschaufelanordnung vorhanden oder bei einer beidseitigen Leitschaufelanordnung bestehen geometrisch bedingte Unterschiede im Ablenkungsgrad für eine übereinstimmende Anströmung. Bevorzugt wird der Leitapparat so angepasst, dass die stromaufwärtig zum Laufrad positionierte Leitschaufelanordnung für den maximal aus dieser Strömungsrichtung auftretenden Durchfluss geeignet ist. Für eine hohe Anströmungsgeschwindigkeit aus einer Richtung werden entsprechend hohe Ablenkungswinkel durch die Leitschaufelanordnung bewirkt, so dass der Anströmungswinkel an den Turbinenblättern des Laufrads für diese Anströmungsrichtung reduziert ist und zugleich die effektive Anströmungsgeschwindigkeit verringert wird.

Eine dritte Ausgestaltungsvariante der Erfindung betrifft zusätzlich zum asymmetrischen Profil einen nicht verschwindenden Anstellwinkel der Profilsehne des Turbinenblatts relativ zur Rotationsebene des Laufrads der jeweiligen Stufe. Dabei wird eine Ausgestaltung mit einer starren Fixierung der Turbinenblätter an der Nabe des Laufrads aufgrund konstruktiver Einfachheit bevorzugt. Demnach ist der gewählte Anstellwinkel fix und dient dazu, den Anströmungswinkel für die Anströmungsrichtung mit höheren Geschwindigkeitsspitzen zu reduzieren und den Anströmungswinkel für die Gegenrichtung mit geringeren maximalen Strömungsgeschwindigkeiten entsprechend zu erhöhen.

Nachfolgend wird die Erfindung anhand von Ausgestaltungsbeispielen und in Verbindung mit Figurendarstellungen genauer erläutert. In diesen ist im Einzelnen Folgendes dargestellt:
- Figur 1: zeigt eine erfindungsgemäß gestaltete aerodynamisch wirksame Stufe für eine bidirektional anströmbare Turbine mit gleichsinnigem Umlauf.
- Figur 2: zeigt ein asymmetrisch gestaltetes Profil mit zwei gegenüberliegend zur Profilsehne angeordneten Profilhälften.
- Figuren 3 und 4: zeigen die Ableitung der beiden Profilhälften von Figur 2 aus zur Profilsehne symmetrischen Profilen.
- Figur 5: zeigt eine erfindungsgemäß gestaltete aerodynamisch wirksame Stufe mit einem asymmetrischen Leitapparat und einem Anstellwinkel für die Profilsehne eines Turbinenblatts relativ zur Rotationsebene für ein asymmetrisch gestaltetes Profil.
- Figur 6: zeigt eine erfindungsgemäße Turbine mit zwei aerodynamisch wirksamen Stufen.

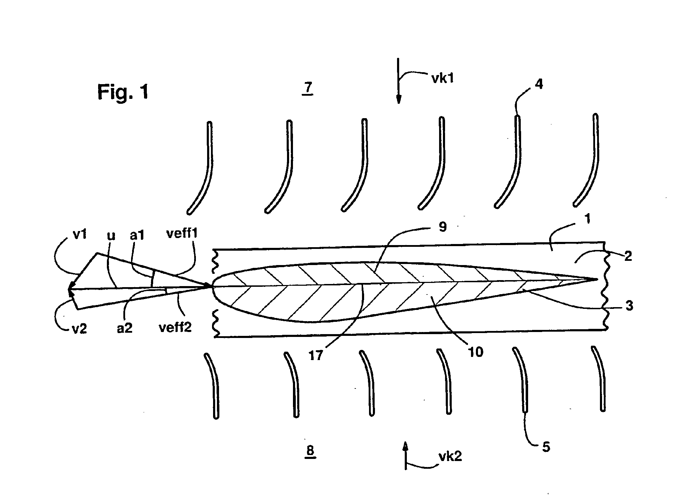

Figur 1 zeigt in schematischer Vereinfachung eine aerodynamisch wirksame Stufe einer gattungsgemäßen Turbine als Draufsicht auf einen Teil des Laufrads 1. Dieses umfasst eine Nabe 2 mit mehreren Turbinenblättern 3, wobei eines in der Figur im Profilschnitt dargestellt ist. Zu beiden Seiten des Laufrads 1 sind die Komponenten des Leitapparats angeordnet. Skizziert ist eine erste Leitschaufelanordnung 4, die bei einer Zuströmung aus dem ersten Strömungskanalteilabschnitt 7 stromaufwärts zum Laufrad 1 liegt. Bei einer entgegengesetzten Strömungsrichtung, einem Zustrom aus dem zweiten Strömungskanalteilabschnitt 8, liegt die zweite Leitschaufelanordnung 5 stromaufwärts.

Die in Figur 1 dargestellten Asymmetrien für die vorliegende aerodynamisch wirksame Stufe sind zur Verdeutlichung übertrieben dargestellt. Eine erste Asymmetrie betrifft den Ablenkungsgrad der Leitschaufeln. Dargestellt ist, dass die erste Leitschaufelanordnung 4 die Strömung stärker umlenkt als die zweite Leitschaufelanordnung 5. Entsprechend ist die erste Leitschaufelanordnung 4 für die erste kanalseitige Strömungsgeschwindigkeit vk1 angepasst, die für den dargestellten Fall bezüglich des Mittelwerts und/oder der Maximalwerts größer ist als die zweite kanalseitige Strömungsgeschwindigkeit vk2 aus der Gegenrichtung. Für diese ist die erste Leitschaufelanordnung 4 ausgelegt.

Eine weitere aus Figur 1 ersichtliche Asymmetrie betrifft das Profil des gezeigten Turbinenblatts 3, das wenigstens für den vorliegenden Teilabschnitt von der üblichen, zur Profilsehne 17 symmetrischen Gestaltung abweicht. Gleichzeitig muss für das erfindungsgemäß asymmetrisch gewählte Profil die bidirektionale Anströmbarkeit erhalten bleiben, so dass das Profil aus einer ersten Profilhälfte 9 und einer zweiten Profilhälfte 10 besteht, die übereinstimmende Profiltiefen aufweisen, stetig aneinander anschließen und die selbst aus an die Strömungscharakteristik angepassten symmetrischen Profilen abgeleitet sind. Dies wird aus der Figurenfolge 2 - 4 deutlich, die nachfolgend erläutert wird.

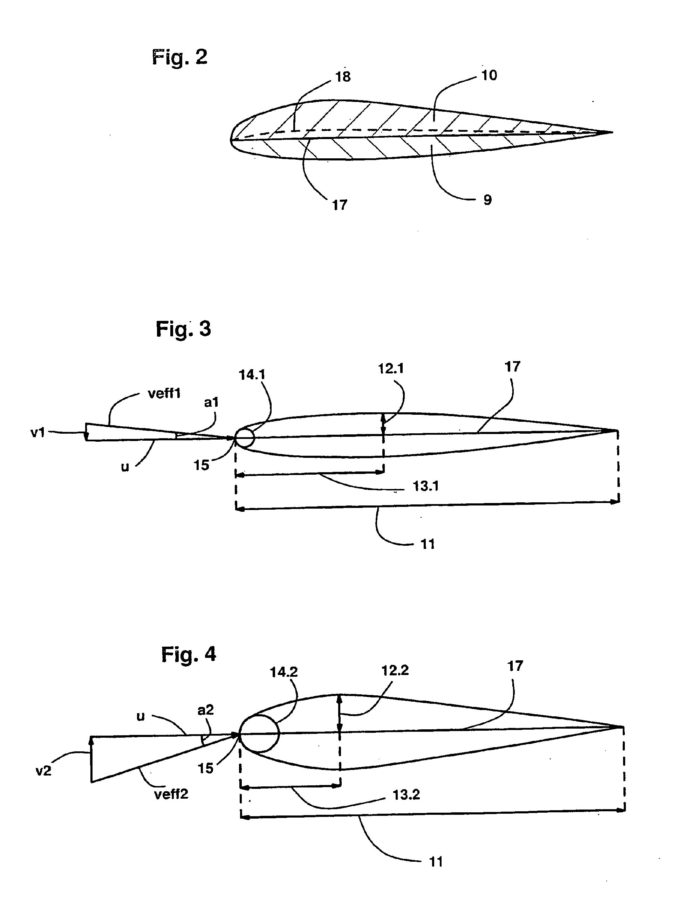

Figur 2 zeigt die erste Profilhälfte 9 und die zweite Profilhälfte 10 mit unterschiedlichen Schraffuren, so dass das Zusammensetzen gegenüberliegend zur Profilsehne 17 verdeutlicht wird. Hieraus resultiert ein gewölbtes Profil - dies wird aus dem Verlauf der gestrichelten Skelettlinie 18 deutlich, wobei jedem der beiden Profilhälften 9, 10 ein separater Dickenverlauf zugeordnet werden kann.

Figur 3 zeigt die Ableitung der ersten Profilhälfte 9. Dabei wird für eine vorgegebene Nenndrehzahl eine zu der jeweiligen Anströmungsrichtung gehörende, erste effektive Anströmungsgeschwindigkeit veff1 angenommen, die sich aus der ersten maximalen Fluidgeschwindigkeit v1 und der negativen Umlaufgeschwindigkeit u vektoriell zusammensetzt. Dabei resultiert ein Anströmungswinkel a1. Für die vorliegende Anströmungscharakteristik wird ein angepasstes, zur Profilsehne 17 symmetrisches Profil ausgewählt, das für eine bestimmte Profiltiefe 11 durch eine Dickenverteilung festgelegt ist. Charakteristisch für die gewählte Dickenverteilung sind Dicke 12.1, 12.2, Dickenrücklage 13.1, 13.2 und Profilnasenradius 14.1, 14.2 zur Abrundung des Profils an der Anströmkante 15.

Für den in Figur 3 dargestellten Fall wird von einer moderaten, ersten maximalen Fluidgeschwindigkeit v1 ausgegangen, entsprechend ist das resultierende Profil länglich gestreckt und weist eine kleine Dicke 12.1, eine große Dickenrücklage 13.1 und einen kleinen Profilnasenradius 14.1 auf. Ein solchermaßen länglich gestrecktes Profil erzeugt eine geringe Reibung, erlaubt jedoch nur kleine Anströmungswinkel a1 bis zum Eintritt eines großflächigen Strömungsabrisses. Die erste Profilhälfte 9, die aus dem in Figur 3 gezeigten Profil abgeleitet ist, wird saugseitig für die betreffende Anströmungsrichtung am Gesamtprofil in Figur 2 angesetzt.

Figur 4 zeigt die Ableitung der zweiten Profilhälfte 10, die für die in Figur 4 dargestellte Anströmungsrichtung saugseitig liegt. Dabei wird von einer zweiten maximalen Fluidgeschwindigkeit v2 aus dieser Richtung ausgegangen, die deutlich größer als die erste maximale Fluidgeschwindigkeit v1 aus Figur 3 ist.

Entsprechend ergibt sich unter Annahme der gleichen negativen Umlaufgeschwindigkeit u aus der vektoriellen Geschwindigkeitsaddition von u und v2 eine zweite effektive Anströmungsgeschwindigkeit veff2, die betragsmäßig größer als veff1 ist und zu einem größeren Anströmungswinkel a2 führt.

Hierauf aufbauend ist das in Figur 4 skizzierte Profil angepasst und weist bei einer gegenüber Figur 3 gleich bleibenden Profiltiefe 11 eine größere Dicke 12.2, eine kleinere Dickenrücklage 13.2 und einen größeren Profilnasenradius 14.2 auf. Bei den für eine gattungsgemäße Turbine typischerweise vorliegenden großen Reynolds-Zahlen kann durch eine solchermaßen angepasste Geometrie des Profils eine verbesserte Abreißcharakteristik erzielt werden. Folglich ist von diesem Profil die zweite Profilhälfte 10 abgeleitet, die dann für die in Figur 4 vorliegende Anströmungsrichtung saugseitig am Gesamtprofil vorliegt - dies ist in Figur 2 dargestellt.

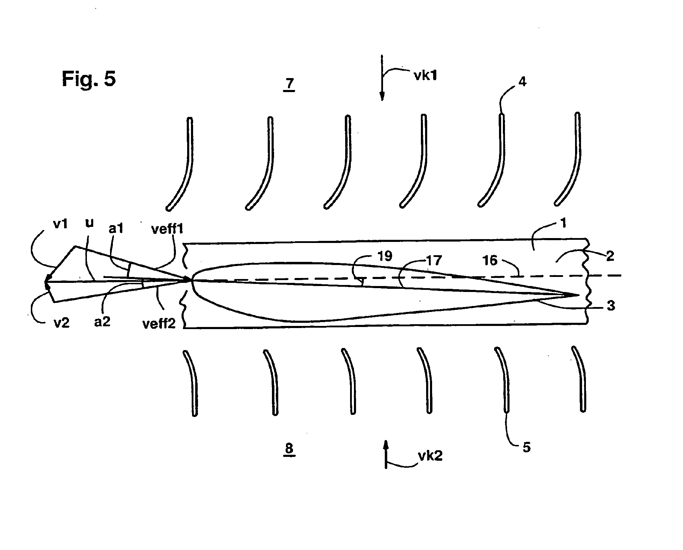

Figur 5 zeigt eine weitere Ausgestaltungsvariante der Erfindung mit einer durch eine Schrägstellung der Turbinenblätter 3 auf der Nabe 2 des Laufrads 1 bewirkten zusätzlichen Asymmetrie. Kombiniert wird diese Maßnahme mit einem asymmetrisch ausgebildeten Leitapparat und einem zur Profilsehne 17 asymmetrischen Profil für das Turbinenblatt 3. Durch den Anstellwinkel 19, zwischen der Profilsehne 17 und der Rotationsebene 16, der bevorzugt kleiner als 5° gewählt ist, wird der Anströmungswinkel a1 bei gleichzeitiger Zunahme des Anströmungswinkels a2 zusätzlich verringert. Dabei ist eine Situation dargestellt, für die eine erste kanalseitige Anströmungsgeschwindigkeit vk1 vorliegt, die gegenüber der zweiten kanalseitigen Anströmungsgeschwindigkeit vk2 größer ist.

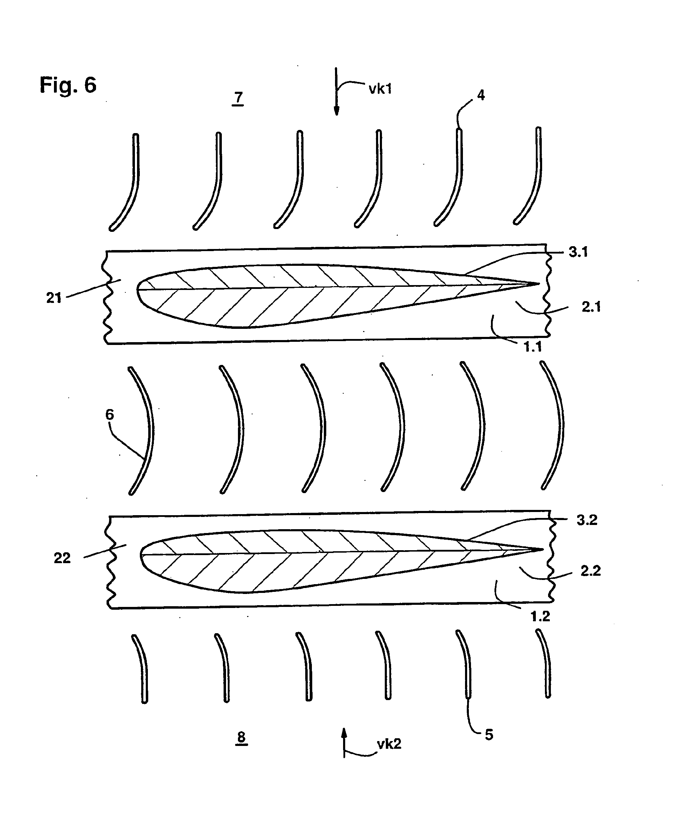

Figur 6 zeigt eine Skizze einer erfindungsgemäßen Turbine mit zwei aerodynamisch wirksamen Stufen. Skizziert ist ein erstes Laufrad 1.1 mit einer ersten Nabe 2.1, die eine Mehrzahl von Turbinenblättern trägt, wobei lediglich ein erstes Turbinenblatt 3.1 im Profilschnitt dargestellt ist. Ferner ist ein zweites Laufrad 1.2 mit einer zweiten Nabe 2.2 und einem zweiten Turbinenblatt 3.2 gezeigt. Typischerweise sind die beiden Laufräder 1.1 und 1.2 drehstarr miteinander verbunden und dienen zum Antrieb eines elektrischen Generators (nicht dargestellt).

Eine zwei- oder mehrstufig aufgebaute gattungsgemäße Turbine ist deshalb von Vorteil, da der maximale Druckabbau zum sicheren Verhindern einer transsonischen Strömung im Nachlauf begrenzt ist; zwei oder mehr Stufen dienen daher der Wirkungsgradsteigerung. Im Hinblick auf eine richtungsabhängige Strömungscharakteristik ist bei zwei oder mehr Stufen zu beachten, dass durch die Rotorwirkung nach jedem der Laufräder eine zusätzliche Drallkomponente in der Strömung vorliegt. Es wird daher bevorzugt zwischen dem ersten Laufrad 1.1 und dem zweiten Laufrad 1.2 eine zusätzliche, mittlere Leitschaufelanordnung 6 verwendet, die der Rückführung des Dralls dient.

Demnach gleicht sich für einen Zustrom aus dem ersten Strömungskanalabschnitt 7 der Einfluss des Laufrads 1.1 nach dem Durchlaufen der mittleren Leitschaufelanordnung 6 aus. Entsprechendes gilt für einen Zustrom aus dem zweiten Strömungskanalabschnitt 8, der idealisiert betrachtet nach dem Passieren des zweiten Laufrads 1.2 und dem Durchströmen der mittleren Leitschaufelanordnung 6 im Wesentlichen der Anströmungssituation entspricht, die für die genannte Zuströmungsrichtung nach dem Durchströmen der zweiten Leitschaufelanordnung 5 vorliegt. Demnach wird zur ersten aerodynamisch wirksamen Stufe 21 das erste Laufrad 1.1 und die erste Leitschaufelanordnung 4 sowie die zweite Leitschaufelanordnung 5 gerechnet. Die zweite aerodynamisch wirksame Stufe 22 umfasst entsprechend das zweite Laufrad 2.2, die erste Leitschaufelanordnung 4 und die zweite Leitschaufelanordnung 5.

Erfindungsgemäß ist die erste Leitschaufelanordnung 4 asymmetrisch zur zweiten Leitschaufelanordnung 5 ausgebildet, das heißt sie erzeugt einen unterschiedlichen Ablenkungsgrad für eine übereinstimmende Anströmung. Eine zusätzliche Asymmetrie liegt für die Profile der Turbinenblätter 3.1, 3.2 vor, die beide entsprechend zu Figur 1 gestaltet sind.

Weitere Ausgestaltungen der Erfindung sind denkbar. Dabei kann insbesondere ein drehbar an der Nabe 2 angelenktes Turbinenblatt 3 mit dem erfindungsgemäß asymmetrischen Profil verwendet werden. Hierdurch wird die Abreißcharakteristik nochmals verbessert, indem eine passive Pitch-Einstellung, insbesondere für kritische, hohe Durchflusskoeffizienten, einen gewissen Anstellwinkel des Turbinenblatts zur Rotationsebene und damit einen verringerten Anströmungswinkel zulässt. Dabei können Anschläge für Drehbewegungen vorgesehen sein, die asymmetrisch zur Rotationsebene angeordnet sind, so dass in eine Richtung ein weiteres Aufschwingen des Turbinenblatts möglich ist. Zusätzlich können die erfindungsgemäßen Maßnahmen mit einem flexiblen oder teilflexiblen Turbinenblatt kombiniert werden. Darüber hinaus ist es denkbar, eine erfindungsgemäße Turbine mit gasförmigem oder flüssigem Fluid anzutreiben.

### Bezugszeichenliste

| | |
|---|---|
| 1, 1.1, 1.2 | Laufrad |
| 2, 2.1, 2.2 | Nabe |
| 3, 3.1, 3.2 | Turbinenblatt |
| 4 | erste Leitschaufelanordnung |
| 5 | zweite Leitschaufelanordnung |
| 6 | mittlere Leitschaufelanordnung |
| 7 | erster Strömungskanalteilabschnitt |
| 8 | zweiter Strömungskanalteilabschnitt |
| 9 | erste Profilhälfte |
| 10 | zweite Profilhälfte |
| 11 | Profiltiefe |
| 12.1, 12.2 | Dicke |
| 13.1, 13.2 | Dickenrücklage |
| 14.1, 14.2 | Profilnasenradius |
| 15 | Anströmkante |
| 16 | Rotationsebene |
| 17 | Profilsehne |
| 18 | Skelettlinie |
| 19 | Anstellwinkel |
| 21 | erste aerodynamisch wirksame Stufe |
| 22 | zweite aerodynamisch wirksame Stufe |
| a1, a2, a3, a4 | Strömungsgeschwindigkeit |
| u | negative Umlaufgeschwindigkeit |
| v1 | erste maximale Fluidgeschwindigkeit |
| v2 | zweite maximale Fluidgeschwindigkeit |
| vk1 | erste kanalseitige Strömungsgeschwindigkeit |
| vk2 | zweite kanalseitige Strömungsgeschwindigkeit |

## Patentansprüche

1. Turbine für einen gleichsinnigen Umlauf bei bidirektionaler Anströmung, umfassend
1.1 wenigstens eine aerodynamische wirksame Stufe mit einem mindestens ein Turbinenblatt (3) umfassenden Laufrad (1), **dadurch gekennzeichnet, dass**
1.2 die aerodynamisch wirksame Stufe als Ganzes bezüglich der Anströmungsrichtung asymmetrisch ausgebildet ist, indem das Profil wenigstens eines Teilabschnitts des Turbinenblatts (3) aus einer ersten Profilhälfte (9) und einer zweiten Profilhälfte (9) mit übereinstimmender Profiltiefe zusammengesetzt ist, die gegenüberliegend zur Profilsehne (17) angeordnet sind und an der Anströmkante (15) einen stetigen Übergang aufweisen, wobei die erste Profilhälfte (9) und die zweite Profilhälfte (10) einen voneinander abweichenden Profilverlauf aufweisen.

2. Turbine nach Anspruch 1, **dadurch gekennzeichnet, dass** die erste Profilhälfte (9) und die zweite Profilhälfte (10) eine unterschiedliche Dickenverteilung aufweisen.

3. Turbine nach Anspruch 2, **dadurch gekennzeichnet, dass** die erste Profilhälfte (9) und die zweite Profilhälfte (10) unterschiedliche Dicken (12.1, 12.2) aufweisen.

4. Turbine nach einem der Ansprüche 2 oder 3, **dadurch gekennzeichnet, dass** die erste Profilhälfte (9) und die zweite Profilhälfte (10) unterschiedliche Dickenrücklagen (13.1, 13.2) aufweisen.

5. Turbine nach einem der Ansprüche 2 bis 4, **dadurch gekennzeichnet, dass** die erste Profilhälfte (9) und die zweite Profilhälfte (10) unterschiedliche Profilnasenradien (14.1, 14.2) an der Anströmkante (15) aufweisen.

6. Turbine nach einem der Ansprüche 1 bis 5 umfassend
6.1 eine erste Leitschaufelanordnung (5) und eine zweite Leitschaufelanordnung (6), wobei das Laufrad (1) zwischen der ersten Leitschaufelanordnung (5) und der zweiten Leitschaufelanordnung (6) platziert ist und wobei die erste Leitschaufelanordnung (5) asymmetrisch zur zweiten Leitschaufelanordnung (6) ausgebildet ist.

7. Turbine nach Anspruch 6, **dadurch gekennzeichnet, dass** die erste Leitschaufelanordnung (5) bei gleichen Anströmbedingungen eine von der zweiten Leitschaufelanordnung (6) abweichende Ablenkung der Strömung erzeugt.

8. Turbine nach einem der vorausgehenden Ansprüche, wobei das Laufrad (1) eine Vielzahl von Turbinenblättern (3) umfasst, **dadurch gekennzeichnet, dass** die Turbinenblätter (3) mit einem Anstellwinkel (19) am Laufrad (1) befestigt sind.

9. Energieerzeugungsanlage, umfassend
9.1 eine Turbine nach einem der Ansprüche 1 bis 8 für die die erste maximale Fluidgeschwindigkeit (v1) in eine erste Durchflussrichtung von der zweiten maximalen Fluidgeschwindigkeit (v2) in die entgegengesetzte, zweite Durchflussrichtung abweicht und die Abweichung der ersten Profilhälfte (9) von der zweiten Profilhälfte (9) an den Unterschied der maximalen Fluidgeschwindigkeiten (v1, v2) angepasst ist.

10. Energieerzeugungsanlage nach Anspruch 9, **dadurch gekennzeichnet, dass** die Energieerzeugungsanlage der Ausnutzung von Wellenenergie dient.

## Claims

1. A turbine for circulating in the same direction under bidirectional inflow, comprising
1.1 at least one aerodynamic active stage having an impeller (1) comprising at least one turbine blade (3), **characterized in that**
1.2 the aerodynamic active stage is asymmetrical as a whole relative to the inflow direction, **in that** the profile of at least one partial segment of the turbine blade (3) is composed of a first profile half (9) and a second profile half (9) having matching profile depths, disposed opposite the profile chord (17), and comprising a continuous transition at the inflow edge (15), wherein the first profile half (9) and the second profile half (10) comprise profile curves that differ from each other.

2. The turbine according to claim 1, **characterised in that** the first profile half (9) and the second profile half (10) have a different thickness distribution.

3. The turbine according to claim 2, **characterised in that** the first profile half (9) and the second profile half (10) have different thicknesses (12.1, 12.2).

4. The turbine according to claim 2 or 3, **characterised in that** the first profile half (9) and the second profile half (10) have a different thickness reserves (13.1, 13.2).

5. The turbine according to any one of claims 2 to 4, **characterised in that** the first profile half (9) and the second profile half (10) have different profile nose radii (14.1, 14.2) at the inflow edge (15).

6. The turbine according to any one of claims 1 to 5 comprising 6.1 a first guide vane arrangement (5) and a second guide arrangement (6), wherein the impeller (1) is placed between the first guide vane arrangement (5) and the second guide vane arrangement (6) and wherein the first guide vane arrangement (5) is configured asymmetrically to the second guide vane arrangement (6).

7. The turbine according to claim 6, **characterised in that** the first guide vane arrangement (5) under the same inflow conditions produces a deflection of the flow different from the second guide vane arrangement (6).

8. The turbine according to any one of the preceding claims, wherein the impeller (1) comprises a plurality of turbine blades (3), **characterised in that** the turbine blades (3) are fixed to the impeller (1) with an angle of attack (19).

9. Energy production plant comprising
9.1 a turbine according to any one of claims 1 to 8 for which the first maximum fluid velocity (v1) in a first flow direction differs from the second maximum fluid velocity (v2) in the opposite second flow direction and the deviation of the first profile half (9) from the second profile half (9) is matched to the difference between the maximum fluid velocities (v1, v2).

10. Energy production plant according to claim 9, **characterised in that** the energy production plant serves to use wave energy.

## Revendications

1. Turbine pour une rotation dans le même sens avec une arrivée de flux bidirectionnelle, comprenant
1.1 au moins un étage ayant un effet aérodynamique avec au moins une roue (1) comprenant au moins une pale de turbine (3),
**caractérisée en ce que**
1.2 l'étage ayant un effet aérodynamique dans son ensemble est construit de façon asymétrique par rapport au sens d'arrivée du flux, en cela que le profilé d'au moins une partie de la pale de turbine (3) se compose d'une première moitié de profilé (9) et d'une deuxième moitié de profilé (9) dont la profondeur de profilé coïncide, qui sont disposées face à face par rapport à la corde du profilé (17) et qui présentent sur le bord d'attaque (15) une transition continue, la première moitié de profilé (9) et la deuxième moitié de profilé (10) présentant une forme de profilé différente l'une de l'autre.

2. Turbine selon la revendication 1, **caractérisée en ce que** la première moitié de profilé (9) et la deuxième moitié de profilé (10) présentent une répartition de l'épaisseur différente.

3. Turbine selon la revendication 2, **caractérisée en ce que** la première moitié de profilé (9) et la deuxième moitié de profilé (10) présentent des épaisseurs (12.1, 12.2) différentes.

4. Turbine selon l'une des revendications 2 ou 3, **caractérisée en ce que** la première moitié de profilé (9) et la deuxième moitié de profilé (10) présentent des positions d'épaisseur maximale (13.1, 13.2) différentes.

5. Turbine selon l'une des revendications 2 à 4, **caractérisée en ce que** la première moitié de profilé (9) et la deuxième moitié de profilé (10) présentent des rayons de bord de profilé (14.1, 14.2) différents sur le bord d'attaque (15).

6. Turbine selon l'une des revendications 1 à 5, comprenant 6.1 une première disposition d'aubes directrices (5) et une deuxième disposition d'aubes directrices (6), la roue (1) étant placée entre la première disposition d'aubes directrices (5) et la deuxième disposition d'aubes directrices (6) et la première disposition d'aubes directrices (5) étant construite de façon asymétrique par rapport à la deuxième disposition d'aubes directrices (6).

7. Turbine selon la revendication 6, **caractérisée en ce que** la première disposition d'aubes directrices (5) produit, dans les mêmes conditions d'arrivée du flux, une déviation du flux différente de la deuxième disposition d'aubes directrices (6).

8. Turbine selon l'une des revendications précédentes, dans laquelle la roue (1) comprend plusieurs pales de turbine (3), **caractérisée en ce que** les pales de turbine (3) sont fixées à la roue (1) selon un angle d'incidence (19).

9. Installation de génération d'énergie comprenant
9.1 une turbine selon l'une des revendications 1 à 8 pour laquelle la première vitesse maximale de fluide (v1) dans un premier sens de circulation est différente de la deuxième vitesse maximale de fluide (v2) dans le deuxième sens de circulation opposé et la différence entre la première moitié de profilé (9) et la deuxième moitié de profilé (9) est adaptée à la différence des vitesses maximales de fluide (v1, v2).

10. Installation de génération d'énergie selon la revendication 9, **caractérisée en ce que** l'installation de génération d'énergie sert à exploiter l'énergie des vagues.
